(19) Europäisches Patentamt

European Patent Office

Office européen des brevets

(11) Veröffentlichungsnummer: **0 154 018 B1**

(12) **EUROPÄISCHE PATENTSCHRIFT**

(45) Veröffentlichungstag der Patentschrift: **04.03.92**

(21) Anmeldenummer: **84115546.8**

(22) Anmeldetag: **15.12.84**

(51) Int. Cl.⁵: **G08G 3/00**, G09B 29/10, G01C 21/22

(54) Verfahren und Einrichtung zur Erleichterung der Navigation eines Schiffes.

(30) Priorität: **10.01.84 DE 3400602**

(43) Veröffentlichungstag der Anmeldung:
**11.09.85 Patentblatt 85/37**

(45) Bekanntmachung des Hinweises auf die
Patenterteilung:
**04.03.92 Patentblatt 92/10**

(84) Benannte Vertragsstaaten:
**BE FR GB NL SE**

(56) Entgegenhaltungen:
**EP-A- 0 015 844**
**DE-A- 3 122 901**
**US-A- 3 899 769**
**US-A- 4 253 150**

(73) Patentinhaber: **PRAKLA-SEISMOS Aktienge-**
**sellschaft**
**Buchholzer Strasse 100**
**W-3000 Hannover 51(DE)**

(72) Erfinder: **Rehmert, Heinrich, Dipl.-Ing.**
**Wegsfeld 42**
**W-3000 Hannover 91(DE)**

(74) Vertreter: **Meyer, Ludgerus et al**
**Patentanwälte Meyer, Stach, Vonnemann**
**Jungfernstieg 38**
**W-2000 Hamburg 36(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren sowie eine Einrichtung zur Erleichterung der Navigation eines Schiffes, insbesondere im landnahen Bereich-nach dem Oberbegriff der Ansprüche 1 bzw. 5.

Aus der DE-A1- 31 22 901 ist ein automatisches Navigationssystem für Land- und Wasserfahrzeuge bekannt, bei dem im Fahrzeug eine digitalisierte Straßenkarte und ein Rechner eingebaut sind, und bei dem über geeignete Geber die Bewegung des eigenen Fahrzeuges auf einer digitalisierten Karte zur Anzeige gebracht wird oder unmittelbar zur Steuerung geeignete Kontrolleinheiten verwendet wird. Es ist auch angegeben, daß im Fahrzeug ein Empfänger vorhanden ist, der Nachrichten über Verkehrsbedingungen aufnimmt und es dadurch gestattet, die in der digitalisierten Karte enthaltene Information aktuell zu ergänzen.

Diese Druckschrift berücksichtigt nicht die Besonderheiten des Schiffsverkehrs. Die dort angegebenen Ergänzung der Informationen der digitalisierten Karte durch Vorsehen eines Funkempfängers entspricht der üblichen Methode der Ausstrahlung des Verkehrsfunks über Rundfunkstationen. Die durch Rundfunk übertragenen Informationen können die in einer digitalisierten Karte enthaltenen Informationen aktuell ergänzen, jedoch richtet sich die übertragene Information an alle Fahrzeuge eines Empfangsbereichs, die daher nur eine allgemeine Information über die Verkehrsdichte, Verkehrsbehinderungen, Umleitungen oder ähnliches erhalten können. Eine Ausstrahlung der individuellen Standorte aller relevanten Fahrzeuge und ihrer Bewegung ist nicht vorgesehen bzw. dieser Druckschrift nicht entnehmbar.

Es ist ferner bekannt, die Position von Schiffen durch terrestrische oder Satelliten-Navigation auf einem Schiff selbst exakt zu bestimmen. Die ermittelten Positionsangaben (Längen-, Breitenangaben) werden üblicherweise von-Hand in Seekarten oder automatisiert durch Plottergeräte in Seekarten eingezeichnet. Bei einem automatisierten Plotterbetrieb ist es möglich, den gefahrenen Kurs und den aktuellen Standort anhand einer ausgezeichneten Linie auf der Seekarte zu erkennen. Die zur Aufzeichnung verwendete Seekarte enthält neben einer Darstellung des betreffenden Seegebietes, das durch eine Rasterung eingeteilt ist, auch Angaben über Positionen von Fahrrinnenmarkierungen, Wracks, Untiefen oder anderen Hindernissen.

Es ist auch bereits bekannt, einen Ausschnitt einer Seekarte mit Positionsmarken, der in einem Speicher abgelegt ist, auf einem Bildschirm darzustellen, wobei der gefahrene Kurs als Leuchtspur sowie der gegenwärtige Standpunkt als Leuchtpunkt angezeigt ist. Der Maßstab des Seekartenausschnittes kann dabei vergrößert oder verkleinert dargestellt werden. Weiterhin ist es bei diesem System möglich, die aktuellen Positionsangaben in alpha-numerischen Werten auf dem Bildschirm mit anzuzeigen.

In der Praxis tritt häufig der Fall auf, daß die auf dem Schiff vorhandenen Seekarten bzw. der im Speicher vorhandene Seekartenausschnitt nicht mehr aktuell ist und z. B. ein neues Wrack, das ein Hindernis darstellt, nicht enthält. Seekarten werden zwar in regelmäßigen Zeitabständen aktualisiert, jedoch können bis zur jeweiligen Aktualisierung gefährliche Zustände eintreten, die auf der Nichtberücksichtigung von zwischenzeitlichen Änderungen im Seefahrtsweg zurückzuführen sind.

Bekannte Anlagen zur Positions- bzw. Kursbesrimmung ermöglichen nur die Aufzeichnung des Kurses bzw. der Postion des eigenen Schiffes. Es ist zwar möglich, den sonstigen Schiffsverkehr auf einem Radarbildschirm darzustellen, jedoch sind diesem Verfahren Grenzen gesetzt, insbesondere dann, wenn der Schiffsverkehr auf einen Fluß mit Windungen ermittelt werden soll, und der Schiffsverkehr hinter einer Windung durch Radarstrahlen nicht mehr erfaßt werden kann. Es ist wünschenswert, auch diesen Schiffsverkehr noch frühzeitig zu erfassen.

Der Erfindung liegt daher die Aufgabe zugrunde, ein Verfahren sowie eine Einrichtung zu Erleichterung der Navigation von Schiffen anzugeben, das sowohl eine schnelle Aktualisierung der verwendeten und zur Anzeige kommenden Seekarte als auch eine vorausschauende, nicht durch bordeigene Mittel gegebene Ermittlung von fremden Schiffsbewegungen ermöglicht.

Diese Aufgabe wird durch die in den Ansprüchen 1 und 5 angegebene Erfindung gelöst. In Unteransprüchen sind vorteilhafte Weiterbildungen der Erfindung angegeben.

Die Erfindung zeichnet sich insbesondere dadurch aus, daß mit Hilfe des dargestellten Verfahrens der Schiffverkehr insbesondere in landnahen Seegebieten bzw. Flüssen erheblich besser überwacht werden kann. Ein Schiffsführer besitzt jeweils aktualisierte Angaben über den Zustand des von ihm befahrenen Seeweges, die Betonnung, das Vorhandensein von Wracks oder anderen Hindernissen sowie die Veränderung von Untiefen. Es ist nicht mehr notwendig, die aktualisierten Angaben jeweils in Seekarten zu verzeichnen, denn sie werden dem Schiffsführer auf einem Anzeigegerät kontinuierlich angezeigt. Gleichzeitig können ihm mit Hilfe des erfindungsgemäßen Verfahrens Schiffsbewegungen von in seinem Seegebiet oder Flußbereich vorhandenen anderen Schiffen angezeigt werden, auch wenn seine eigene Radaranlage ihm diese Anzeigemöglichkeit nicht verschaffen kann, wenn Hindernisse oder z. B. besondere atmosphärische oder Seegangsbedingungen dieses verhindern sollten.

In einer besonderen Ausführungsform der Erfindung werden zusätzliche Kenndaten des Schiffes an die Vermittlungsstelle übertragen, um so Hafenbehörden, Lotsen und andere Institutionen frühzeitig Kenntnis über das Schiff zu verschaffen.

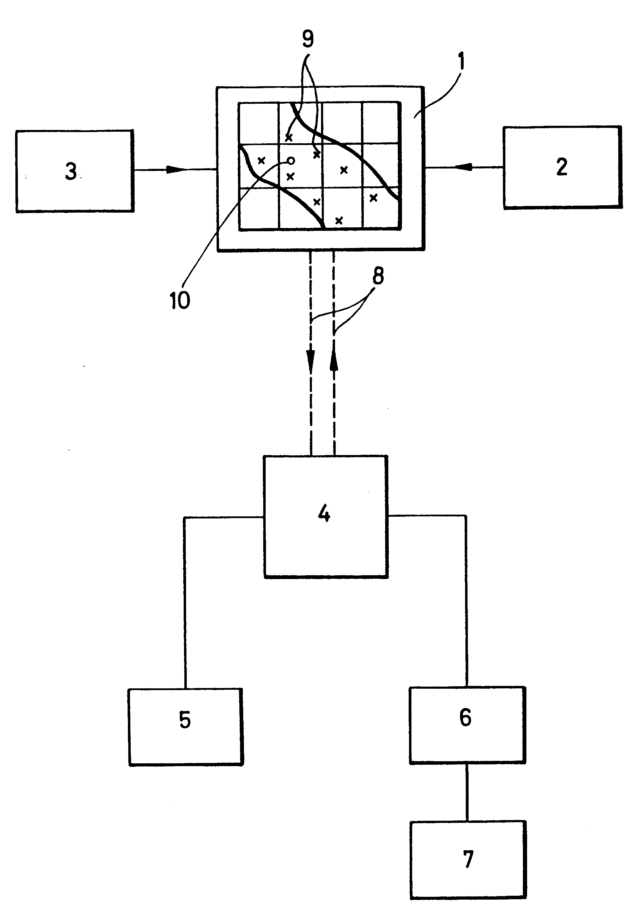

Die Erfindung wird nachstehend anhand eines Ausführungsbeispiels näher erläutert. Die Figur zeigt schematisch eine Darstellung des Verfahrens sowie der Einrichtung nach der Erfindung.

Auf dem Schiff befindet sich, z. B. auf der Steuerbrücke, neben dem auf dem Schiff vorhandenen Radargerät ein Anzeigegerät 1, das zur Darstellung des von diesem Schiff gegenwärtig befahrenen Seegebietes oder Flusses dient. Dazu wird von einem Speicher 3 die jeweils notwendige Seekarte auf das Anzeigegerät übertragen. Auf dem Bildschirm des Anzeigegerätes 1 ist dann das betreffende Seegebiet mit für die Navigation notwendigen Merkmalen 9, z. B. Land- oder Flußgrenzen, Markierung der Fahrrinne, Wracks, Navigationspunkten oder anderes dargestellt.

Von einem Positionsgeber 2 werden jeweils die Koordinaten des Standortes des Schiffes auf das Anzeigegerät 1 übertragen und sind dort auf dem Bildschirm in Form eines Leuchtpunktes sichtbar. Durch Speicherung der für das dargestellte Gebiet bisher befahrenen Koordinatenpunkte und Darstellung auf dem Bildschirm kann der bisherige Kurs als grafische Linie zur Anzeige kommen. Die jeweilige Seekarte ist vorzugsweise als Merkatorkarte auf dem Anzeigegerät dargestellt. Neben der Seekarte mit ihren Merkmalen 9 ist der Seekarte vorzugsweise ein elektronisch erzeugtes Raster unterlegt.

Es kommt häufig vor, daß die verwendeten Seekarten aktualisiert werden müssen. Das Deutsche Hydrographische Institut gibt z. B. wöchentliche Aktualisierungen heraus, die von einem Schiffsführer zu berücksichtigen sind. Um diese Änderungen in einer elektronisch abgespeicherten Seekarte zu vermerken, ist eine Umprogrammierung der Seekarte notwendig. Es kommt hinzu, daß die Änderungen erst nach einer gewissen Verzögerung zum jeweiligen Schiff gelangen können. Dies kann in besonderen Fällen zu gefährlichen Situationen führen, wenn z. B. ein neues Wrack nicht vom Schiffsführer erkannt werden kann, das in den von ihm verwendeten Karten noch nicht verzeichnet ist.

Die Erfindung ermöglicht die jeweilige unmittelbare Aktualisierung der angezeigten Seekarte, indem z. B. von einer an Land befindlichen Vermittlungsstelle aktualisierte Angaben an das Anzeigegerät auf dem Schiff übertragen werden und diese dort die angezeigten Merkmale 9 der Seekarte korrigieren bzw. ergänzen. Da nicht die komplette Seekarte übertragen werden muß, genügt es, wenn die zu übertragenden Daten mit relativ geringer Geschwindigkeit und Frequenz an das Anzeigegerät übertragen werden. Vorzugsweise erfolgt die Übertragung mit einer Geschwindigkeit von 50 Baud. In einer besonderen Ausführungsform der Erfindung werden die Angaben mit dem Sprachkanal verschachtelt übertragen. Die Angaben werden der Vermittlungsstelle von einer Datenbank 5 übermittelt, die jeweils, z. B. täglich, aktualisiert werden kann. Damit wird eine unmittelbare schnellstmögliche Anpassung der auf dem Schiff vorhandenen Seekarte erreicht. Neben der Aktualisierung der Seekarte können aber auch gleichzeitig Schiffsbewegungen von anderen sich im gleichen Seegebiet gleichzeitig befindenden Schiffen auf das Anzeigegerät übertragen werden. Die Koordinaten dieser Schiffsbewegungen werden von einer Radaranlage 7 abgeleitet und in einer bekannten Aufbereitungsanlage 6 so aufbereitet, daß nur noch die Koordinaten der Schiffe, nicht jedoch fester Punkte, als künstliches Radarbild zum Anzeigegerät übertragen werden. Damit erhält der Schiffsführer nicht nur aktuelle Informationen über die tatsächlichen Verhältnisse im zur Zeit befahrenen Seegebiet, sondern gleichzeitig auch genaue Darstellungen über die Verkehrsbewegungen in seinem Seegebiet, auch wenn seine eigene Radaranlage nicht in der Lage ist, diese zu registrieren, wenn z. B. diese Schiffsbewegungen sich hinter von seiner Radaranlage nicht erfaßbaren Flußwindungen befinden. Auf diese Weise kann die Sicherheit der Navigation beträchtlich erhöht werden.

Über den gleichen Datenkanal, über den die Angaben übertragen werden, kann im Rückkanal eine Kenndstenübertragung des Schiffes erfolgen. Diese Kenndaten können insbesondere Größe, Wasserverdrängung, Ladung, Art des Schiffes usw. enthalten. Wenn das System so ausgestaltet ist, daß die Übertragung der Kenndaten zunächst zu erfolgen hat, ist das ganze Verfahren derart automatisierbar, daß nach Übertragung der Kenndaten vom Schiff automatisch die entsprechenden Angaben über Seekartenänderungen und Schiffebewegungen von der Vermittlungsstelle 4 an das Schiff übertragen werden.

## Patentansprüche

1. Verfahren zur Erleichterung der Navigation eines Schiffes, insbesondere im landnahen Seebereich oder auf einem Fluß, bei dem auf einem Anzeigegerät auf dem Schiff eine aus einem Speicher (3) ausgelesene Seekarte mit für die Navigation bedeutsamen Merkmalen (9) des Seegebietes, in dem sich das Schiff befindet, sowie die Position des Schiffes in dieser Karte dargestellt werden und von einer außerhalb des Schiffes befindlichen Vermittlungsstelle (4) die Navigation betreffende Angaben übertragen werden, dadurch gekennzeichnet, daß die Angaben, die Informationen über in dem Seegebiet befindliche andere Schiffe enthalten, von einer Radaranlage (7) abgeleitet, über eine Aufbereitungsanlage (8) und über die Vermittlungsstelle (4) in regelmäßigen Abständen oder auf Abruf über einen Funkkanal zum Schiff übertragen werden, und daß aus einer Datenbank (5) Berichtigungsinformationen für die aus dem Speicher (3) ausgelesene Seekarte über die Vermittlungsstelle (4) zum Schiff übertragen werden, so daß die auf dem Anzeigegerät (1) zur Anzeige kommende Seekarte dadurch jeweils auf dem neuesten Stand gehalten wird.

2.  Verfahren nach Anspruch 1, dadurch gekennzeichnet, daß die Übertragung der Angaben durch digitale Verschachtelung der Angaben mit dem über einen Funkkanal (8) übertragenen Sprechfunk erfolgt.

3.  Verfahren nach Anspruch 1, dadurch gekennzeichnet, daß neben der Übertragung der Angaben an das Anzeigegerät (1) zusätzlich eine Übertragung von Kenndaten des Schiffes vom Schiff zur Vermittlungsstelle (4) erfolgt.

4.  Verfahren nach Anspruch 3, dadurch gekennzeichnet, daß die Übertragung der Angaben zum Anzeigegerät (1) erst nach der Übertragung der Kenndaten zur Vermittlungsstelle (4) erfolgt.

5.  Einrichtung zur Durchführung des Verfahrens nach Anspruch 1 mit einem Anzeigegerät, dem von einem Positionsgeber (2) die jeweiligen Positionsangaben des Schiffes sowie von einem Speicher (3) eine Seekarte des Seegebietes, in dem sich das Schiff befindet, zugeführt sind, und ferner eine sich außerhalb des Schiffes befindliche Vermittlungsstelle (4) vogesehen ist, über die die auf dem Anzeigegerät (1) dargestellten Angaben ergänz- und korrigierbar sind, dadurch gekennzeichnet, daß der Vermittlungsstelle eine Datenbank (5) und über eine Aufbereitungsanlage (8) eine Radaranordnung (7) zugeordnet sind, von denen die die Seekarte aktualisierenden Angaben und die die Seekarte ergänzenden Angaben abgeleitet werden.

6.  Einrichtung nach Anspruch 5, dadurch gekennzeichnet, daß eine Radaranordnung (7), die sich nicht auf dem Schiff befindet, vorhanden ist, von der Positionsdaten von sich im gleichen Seegebiet gleichzeitig befindenen weiteren Seefahrzeugen ableitbar ist und daß diese Positionsdaten über die Vermittlungsstelle (4) dem Anzeigegerät (1) zugeführt werden.

7.  Einrichtung nach Anspruch 6, dadurch gekennzeichnet, daß die von der Radaranordnung (7) abgeleiteten Positionsdaten bzw. ein dafür von der Radaranordnung abgeleitetes Radarbild in eine Aufbereitungsanlage (6) soweit aufgebreitet werden, daß nur noch Positionsdaten von beweglichen Seefahrzeugen über die Vermittlungsstelle an das Anzeigegerät (1) übertragen werden.

**Claims**

1.  Method of facilitating the navigation of a ship, in particular in a coastal region or on a river, in which a sea chart, read out from a memory (3), with the features (9) significant for navigation of the sea area in which the ship is located, as well as the position of the ship on this chart are represented on a display device on the ship and details concerning navigation are transmitted from a relaying point (4) off the ship, characterised in that the details, which contain information on other ships located in the sea area, are derived from a radar station (7) and transmitted via a processing station (8), and via the relaying point (4) at regular intervals or on call via a radio channel to the ship, and in that corrective information for the sea chart read out from the memory (3) is transmitted from a database (5) via the relaying point (4) to the ship, so that the sea chart displayed on the display device (1) is thereby kept up to date each time.

2.  Method according to Claim 1, characterised in that the transmission of the details takes place by digital interleaving of the details with the radio-telephone transmitted via a radio channel (8).

3.  Method according to Claim 1, characterised in that, apart from the transmission of the details to the display device (1), a transmission of characteristic data on the ship additionally takes place from the ship to the relaying point (4).

4.  Method according to Claim 3, characterised in that the transmission of the details to the display device (1) does not take place until after the transmission of the characteristic data to the relaying point (4).

5.  System for carrying out the method according to Claim 1 with a display device, to which the respective positional details of the ship are fed from a position sensor (2) and a sea chart of the sea area in which the ship is located is fed from a memory (3), and there is also provided a relaying point (4), which is located off the ship and via which the details represented on the display device (1) can be supplemented and corrected, characterised in that the relaying point is assigned a database (5) and, via a processing station (8), a radar arrangement (7), from which the details updating the sea chart and the details supplementing the sea chart are derived.

6. System according to Claim 5, characterised in that there is a radar arrangement (7), which is not located on the ship and from which the positional data of further sea vessels located in the same sea area at the same time can be derived and in that these positional data are fed via the relaying point (4) to the display device (1).

7. System according to Claim 6, characterised in that the positional data derived from the radar arrangement (7) and/or a radar trace derived for this from the radar arrangement are processed in a processing station (6) to such an extent that only positional data on moving sea vessels are then transmitted via the relaying point to the display device (1).

**Revendications**

1. Procédé pour faciliter la navigation d'un navire, en particulier dans la zone maritime côtière ou sur un fleuve, selon lequel sont représentées, sur un appareil indicateur prévu sur le navire, une carte hydrographique extraite d'une mémoire (3) et comportant des caractéristiques (9), significatives pour la navigation, de la zone dans laquelle se trouve le navire, ainsi que la position du navire sur cette carte, et selon lequel des données concernant la navigation sont communiquées à partir d'un central de transmission (4) situé hors du navire, caractérisé en ce que les données comprenant des informations sur d'autres navires qui se trouvent dans la zone de navigation sont obtenues à partir d'une installation radar (7) et transmises au navire par l'intermédiaire d'une installation de traitement (8) et du central de transmission (4), à intervalles réguliers ou sur interrogation par un canal radio, et en ce que, à partir d'une banque de données (5), des informations rectificatives sont transmises au navire, par l'intermédiaire du central de transmission (4), pour la carte hydrographique extraite de la mémoire (3), de telle manière que la carte hydrographique qui s'affiche sur l'appareil indicateur (1) soit ainsi chaque fois mise à jour.

2. Procédé suivant la revendication 1, caractérisé en ce que la transmission des données se fait par imbrication numérique des données avec la radiotéléphonie transmise par l'intermédiaire d'un canal radio (8).

3. Procédé suivant la revendication 1, caractérisé en ce que, outre la transmission des données à l'appareil indicateur (1), une transmission de données caractéristiques d'identification du navire est en plus effectuée du navire au central de transmission (4).

4. Procédé suivant la revendication 3, caractérisé en ce que la transmission des données à l'appareil indicateur (1) ne se fait qu'après la transmission des données d'identification au central de transmission (4).

5. Dispositif pour la mise en oeuvre du procédé suivant la revendication 1, comprenant un appareil indicateur auquel sont amenées à partir d'un transmetteur de position (2) les données concernant la position réelle du navire ainsi qu'une carte hydrographique venant d'une mémoire (3) et représentant la zone dans laquelle se trouve le navire, un central de transmission (4), situé hors du navire et par l'intermédiaire duquel les données affichées sur l'appareil indicateur (1) peuvent être complétées et corrigées, étant en outre prévu, caractérisé en ce que le central de transmission est associé à une banque de données (5) et, par l'intermédiaire d'une installation de traitement (8), à une installation radar (7), à partir desquelles sont obtenues les données actualisant la carte hydrographique et les données complétant la carte hydrographique.

6. Dispositif suivant la revendiction 5, caractérisé en ce qu'il est prévu une installation radar (7) qui ne se trouve pas sur le navire, à partir de laquelle peuvent être obtenues des données sur la position d'autres bâtiments présents en même temps dans la même zone de navigation, et en ce que ces données de position sont fournies à l'appareil indicateur (1) par l'intermédiaire du central de transmission (4).

7. Dispositif suivant la revendication 6, caractérisé en ce que les données de position obtenues à partir de l'installation radar (7) ou une image radar obtenue à partir de l'installation radar sont traitées dans une installation de traitement (6) de telle manière que seules les données sur la position de bâtiments en mouvement soient transmises à l'appareil indicateur (1) par l'intermédiaire du central de transmission.